# FASCICULE DE BREVET EUROPEEN

(11) **EP 2 185 826 B1**
(45) Date de publication et mention de la délivrance du brevet: **30.05.2012**
(21) Numéro de dépôt: 08837968.0
(22) Date de dépôt: 25.07.2008
(51) Int. Cl.: F16B 19/10, B64F 5/00, B23B 47/28

(54) **AGRAFAGE D'EPINGLAGE A VIS ET SON UTILISATION POUR LA FIXATION TEMPORAIRE D'UNE GRILLE DE PERÇAGE SUR DES ELEMENTS A ASSEMBLER**
NIETENKLAMMERSCHRAUBE UND IHRE VERWENDUNG ZUR VORÜBERGEHENDEN BEFESTIGUNG EINES BOHRGITTERS AN ZUSAMMENZUSETZENDEN ELEMENTEN
RIVETING SCREW TACK AND USE THEREOF FOR TEMPORARILY FIXING A BORING GRID TO ELEMENTS TO BE ASSEMBLED

(30) Priorité: 03.08.2007 FR 0756929
(43) Date de publication de la demande: 19.05.2010
(73) Titulaire: Lisi Aerospace, 95310 Saint Ouen L'aumone (FR)
(72) Inventeur: PROT, Philippe, F-18500 Vignoux sur Barangeon (FR); ROUSSY, Marc, F-18000 Bourges (FR)
(74) Mandataire: Lotaut, Yacine Diaw
(86) Numéro de dépôt international: PCT/FR2008/001112
(87) Numéro de publication internationale: WO 2009/047405

(56) Documents cités:
- GB-A- 153 021
- US-A- 2 269 188
- US-A- 2 271 879
- US-A- 2 320 493
- US-A- 2 354 480
- US-A- 5 275 515
- US-A- 5 318 394
- US-A1- 2005 084 344
- US-B1- 6 755 407

## Description

La présente invention concerne une agrafe d'épinglage à vis destinée à être introduite dans des orifices respectifs coaxiaux d'au moins deux éléments à assembler, du type décrit dans le préambule de la revendication 1.

De telles agrafes sont décrites par exemple dans les brevets FR 81 18309 ou EP 0 336 808.

La présente invention concerne également l'utilisation de ces agrafes pour la fixation temporaire d'une grille de perçage sur les éléments à assembler. Une agrafe pour la fixation temporaire d'une grille de perçage sur des éléments à assembler est connue par exemple du document US-B1-6 755 407.

Actuellement, l'assemblage d'éléments structuraux complexes, tels que des sous ensembles de structures d'aéronefs, nécessite des opérations préalables de perçage très précises en diamètre et en positionnement des axes de perçage les uns par rapport aux autres. Un exemple typique, mais non limitatif, est constitué par l'assemblage de deux demi voilures sur un fuselage d'avion.

A cet effet, on utilise couramment des gabarits de perçage appelés communément grilles de perçage, constituées de plaques métalliques épaisses dans lesquelles sont ménagées de multiples alvéoles correspondant aux différents perçages à effectuer dans les éléments structuraux. Ces grilles sont actuellement solidement fixées sur la structure au moyen de boulons calibrés, serrés par des écrous et des rondelles, qui sont disposés dans les quelques trous de référence pré-percés en usine dans les éléments à assembler.

En raison des grandes dimensions des structures à assembler, il est impossible à un même opérateur d'avoir accès simultanément aux deux faces de l'assemblage. Il faut donc au moins deux opérateurs et souvent plus en raison du poids non négligeable desdites grilles de perçage, pour les mettre en place et ensuite les déposer après exécution de tous les perçages. Pour les opérateurs situés côté interne, en général dans un caisson d'accessibilité réduite, les conditions de travail sont souvent assez pénibles. Il résulte de cette technique des temps de travail et des coûts de main-d'oeuvre conséquents, pour la mise en place, puis pour la dépose de l'ensemble des grilles de perçage.

Pour pouvoir s'affranchir de la présence d'opérateurs du côté interne de la structure, c'est-à-dire sur la face opposée à celle sur laquelle sont placées les grilles, il faut pouvoir disposer d'un système de fixation qui soit montable et démontable avec accès uniquement sur la face externe, c'est-à-dire un système de fixation permettant de travailler "en aveugle", sans avoir visuellement accès à la face opposée pour sa mise en place.

Les agrafes d'épinglage à vis du type susmentionné permettent précisément de remplir ce rôle. De plus, comme elles sont démontables sans destruction, elles sont réutilisables. Cependant, les agrafes actuellement disponibles sur le marché ne sont pas assez précises dans leur dimension et ne permettrent donc pas en pratique d'assurer le positionnement correct des grilles de perçage.

En particulier, les demi pinces, qui sont généralement réalisées par estampage à partir d'un fil de section circulaire, présentent des bavures au plan de joint des outils. Pour éliminer ces bavures, une opération de découpe par cisaille est donc nécessaire. Mais cette opération est particulièrement difficile à maîtriser de sorte qu'il est très courant que les demi pinces ne soient pas symétriques et identiques.

De plus, l'écarteur est en général obtenu par découpe à partie d'une tôle mince ou d'un feuillard générant ainsi des arêtes vives.

Par ailleurs, les deux demi pinces sont souvent assemblées par sertissage dans l'extrémité de la tige. Il en résulte divers défauts de forme et de coaxialité et de symétrie par rapport à la tige.

Enfin, l'écarteur dispose d'un certain degré de liberté latéral par rapport à l'axe tige/demi pinces et par rapport à l'axe du corps creux, ce qui provoque des risques d'endommagement des orifices des éléments à assembler ou des demi pinces.

Tous ces défauts engendrent une incertitude trop importante dans le positionnement des agrafes et par conséquent dans celui des grilles de perçage.

La présente invention a donc pour but principal de remédier à ces inconvénients et pour ce faire elle a pour objet une agrafe d'épinglage à vis du type susmentionné, caractérisée par la partie caractérisante de la revendication 1.

Par ailleurs :
- l'écarteur est en forme de lame plate et présente deux faces longitudinales parallèles et deux côtés latéraux de forme convexe présentant un rayon de courbure externe identique au diamètre externe des demi pinces ;
- l'écarteur est pourvu, à une extrémité proximale, de chanfreins symétriques facilitant son engagement entre les becs d'accrochage et, à son autre extrémité, de deux épaulements symétriques en forme de T destinés à immobiliser l'écarteur en position axiale et en rotation à l'intérieur du corps creux ; et,
- les demi pinces sont identiques et symétriques par rapport à l'axe d'allongement.

L'agrafe ainsi constituée se prête particulièrement bien à son utilisation pour le positionnement d'une grille de perçage comportant des alvéoles correspondant aux différents trous à percer dans les éléments à assembler.

A cet effet, le corps creux de l'agrafe comporte, sur sa surface cylindrique externe, une portée de centrage en forme d'anneau à section pseudo sphérique, dont le diamètre externe correspond au diamètre interne de l'une au moins des alvéoles de la grille.

De plus, l'agrafe comporte également un chapeau monté sur l'écrou au moyen d'une vis et dont le diamètre externe est supérieur au diamètre interne de ladite alvéole, le serrage de cette vis assurant la fixation de la grille sur les éléments à assembler.

Dans une variante de réalisation de l'invention, l'agrafe comporte une rotule de positionnement de la face d'appui du corps creux.

De plus, la rotule comporte une portée de centrage annulaire comportant une surface externe convexe de forme sphérique coopérant avec une rondelle d'appui comportant une surface interne concave de forme sphérique complémentaire de la surface convexe.

Selon une autre variante de réalisation de l'invention, la face d'appui est constituée par une portée conique de centrage ayant un angle au sommet allant d'environ 90° à 140°.

Selon encore une autre variante de réalisation de l'invention, le corps creux est entouré par un fourreau cylindrique creux présentant en coupe une section oblongue constituée de deux demi cylindres de rayon sensiblement égal au rayon externe du corps creux, raccordés par deux méplats de longueur égale à l'entraxe des deux demi cylindres.

Avantageusement, le corps creux est traversé par un orifice circulaire qui est coaxial à la portée sphérique et dont le diamètre est identique au diamètre de l'ensemble formé par les demi pinces et l'écarteur.

L'ensemble formé par les demi pinces présente un écartement, mesuré au niveau de leurs extrémités libres, qui diminue progressivement en direction des becs selon un angle inférieur à 45°, de préférence d'environ 20°, de sorte que le passage de la position de repos à la position active des demi pinces s'effectue très rapidement, avec un faible déplacement axial de l'écarteur, de l'ordre de 15 mm, et une faible rotation de l'écrou sur la tige filetée.

Les deux demi pinces sont centrées de manière précise uniquement sur l'orifice d'un des éléments, ce qui permet une meilleure précision de centrage, notamment si les orifices des éléments à assembler sont de diamètres légèrement différents et/ou ne sont pas parfaitement coaxiaux.

L'invention se rapporte également à un procédé utilisant cette agrafe pour fixer, au moins temporairement, deux éléments présentant des orifices coaxiaux destinés à recevoir une partie de ladite agrafe.

Enfin, l'invention concerne aussi l'utilisation de cette agrafe pour positionner avec précision une grille de perçage par rapport à deux éléments à assembler comportant des orifices coaxiaux destinés à recevoir une partie de ladite agrafe.

La présente invention va maintenant être décrite plus en détail en référence à des modes de réalisation particuliers donnés à titre d'illustration uniquement et représentés sur les figures annexées dans lesquelles :
- la figure 1 est une vue de dessus d'une grille de perçage destinée à servir de gabarit pour le perçage d'éléments structuraux à assembler ;
- la figure 2 est une vue en coupe de la grille de la figure 1 positionnée sur lesdits éléments structuraux ;
- la figure 3 représente la grille de perçage fixée sur les éléments à assembler, selon la technique de l'art antérieur;
- la figure 4 est une vue en coupe d'une agrafe de l'art antérieur, telle que décrite par exemple dans le brevet FR 81 18309 ;
- les figures 5 et 6 sont des vues en coupe selon l'axe V-V de la figure 4 illustrant l'agrafe de l'art antérieur insérée dans un orifice d'un élément à assembler ;
- la figure 7 est une vue en coupe d'une agrafe conforme à la présente invention ;
- la figure 8 est une vue en éclatée de l'agrafe de la figure 7 ;
- les figures 9 et 10 sont des vues en coupe représentant deux étapes de mise en place d'une agrafe conforme à la présente invention ;
- la figure 11 est une vue en coupe de demi pinces dont est munie l'agrafe ;
- la figure 12 est une vue en coupe d'un écarteur dont est munie l'agrafe ;
- la figure 13 est une vue en coupe de l'écarteur et des demi pinces ;
- la figure 14 est une vue en coupe illustrant le positionnement d'une grille de perçage sur les éléments à assembler au moyen d'agrafes conformes à l'invention ;
- la figure 15 est une vue en coupe d'une grille de perçage montée sur les éléments à assembler à l'aide d'une variante de réalisation d'agrafe conforme à la présente invention ;
- la figure 16 est une vue de détail de la figure 15 ;
- la figure 17 est une autre variante de réalisation d'agrafe conforme à la présente invention ;
- la figure 18 est une vue en coupe d'encore une autre variante de réalisation d'une agrafe conforme à la présente invention et ;
- la figure 19 est une vue en coupe selon la ligne XIX-XIX de la figure 18.

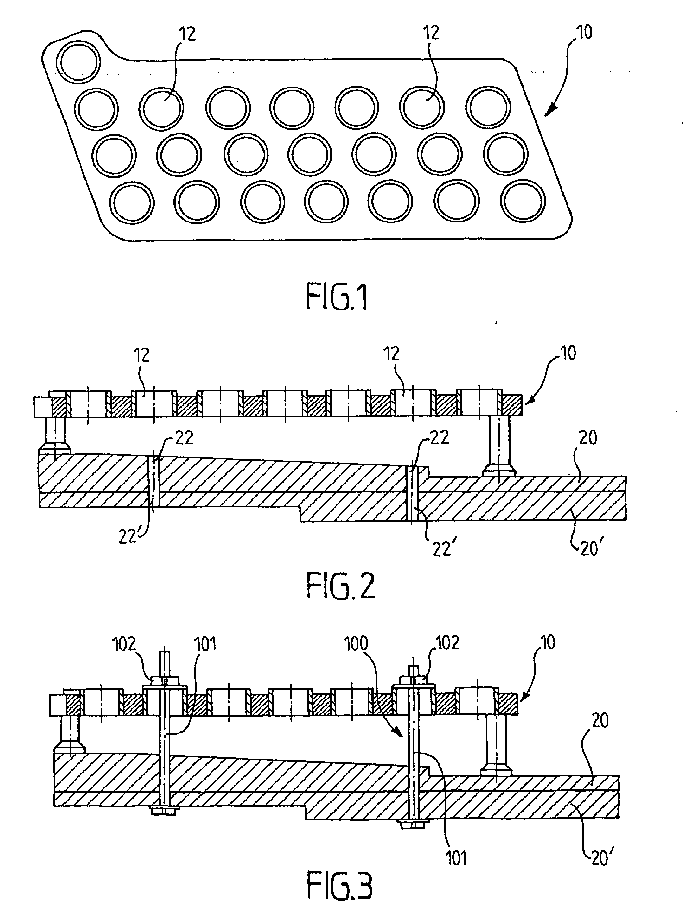

La figure 1 représente une grille de perçage 10 destinée à être fixée sur une structure d'avion représentée sur la figure 2. Cette structure est constituée ici de deux éléments à assembler 20 et 20'.

Comme cela est visible, la grille de perçage 10 forme un gabarit devant être positionnée avec une extrême précision. Cette grille 10 comporte une série d'alvéoles traversantes 12 réparties sur toute sa surface et correspondant aux différents trous à percer dans la structure, au moyen d'unités de perçage venant se positionner dans lesdites alvéoles.

Certaines de ces alvéoles 12 sont destinées à recevoir des agrafes d'épinglage à vis faisant l'objet de la présente invention et qui seront décrites plus en détail par la suite. A cet effet, lesdites alvéoles sont coaxiales avec des orifices de référence 22, 22' ménagés au travers des éléments 20, 20', comme illustré sur la figure 2, et qui sont préalablement percés en usine.

Dans un certain type d'art antérieur, illustré par la figure 3, il était courant d'utiliser des systèmes de serrage 100 comprenant un boulon 101 associé à un écrou de serrage 102 disposés de part et d'autre des éléments 10 et 20 à assembler. Cependant, un tel montage n'est possible que quand l'opérateur peut avoir accès aux deux surfaces externes.

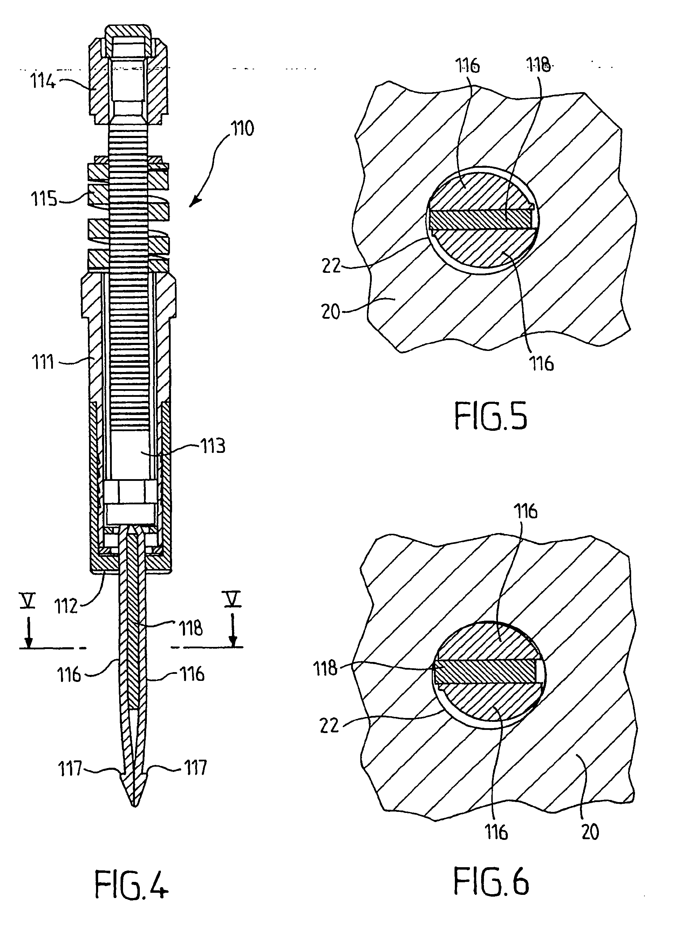

Ainsi, lorsque l'une des surfaces externes n'est pas accessible, il est nécessaire d'utiliser un moyen de serrage qualifié « d'aveugle », c'est-à-dire qui peut être serré et desserré par manipulation de celui-ci d'un seul côté. C'est notamment la fonction que peuvent remplir les agrafes d'épinglage à vis 110, telles que celle de l'art antérieur illustrée par les figures 4 à 6.

Typiquement, une agrafe à vis 110 de l'art antérieur comprend :
- un corps cylindrique creux 111 s'étendant selon un axe d'allongement et comportant une face d'appui 112 destinée à venir au contact de la surface externe d'un des éléments,
- une tige centrale 113 traversant localement le corps creux et présentant une portion localisée à l'intérieur dudit corps creux munie d'un filetage externe,
- un écrou 114 monté sur la tige filetée,
- un ressort de compression 115 situé à l'opposée de la face d'appui 112,
- deux demi pinces axiales 116 solidaires de la tige centrale 113, lesdites pinces présentant, à leur extrémité libre, des rebords faisant saillie vers l'extérieur, sensiblement radialement, pour former des becs d'accrochage 117, et
- un écarteur central 118 disposé entre les deux demi pinces 116 et solidaire du corps creux 111 à l'intérieur duquel il est immobilisé en rotation et en translation.

L'ensemble tige 113/demi pinces 116 est conçu pour pouvoir être déplacé axialement à l'intérieur du corps creux 111 et le long de l'écarteur 118 par rotation de l'écrou 114 sur la tige filetée entre une première position de repos dans laquelle les becs d'accrochages 117 des deux demi pinces sont rapprochés radialement de manière à pouvoir s'engager dans les orifices 22, 22' des éléments 20, 20' à assembler et une seconde position active dans laquelle les deux demi pinces 116 sont rétractées à l'intérieur du corps creux 111 et écartées radialement le long de l'écarteur 118 de sorte que les becs d'accrochage 117 viennent s'accrocher derrière la face extérieure du second élément 20', en bordure de l'orifice 22'.

Comme cela est visible sur les figures 5 et 6, en raison de la conception de l'écarteur 117 et des demi pinces 116, il existe un jeu important entre celles-ci et la surface interne de l'orifice 22. Par ailleurs, les arêtes de l'écarteur 118, dont la section est rectangulaire, peuvent fortement endommager la surface interne des orifices 22, 22'.

Par conséquent, non seulement les agrafes dë l'art antérieur ne permettent pas un bon positionnement de la grille 10 sur la structure 20, 20' notamment à cause de la forme des demi pinces et de l'écarteur et du jeu radial J, mais il y a un risque important d'endommagement des orifices 22, 22' de la structure.

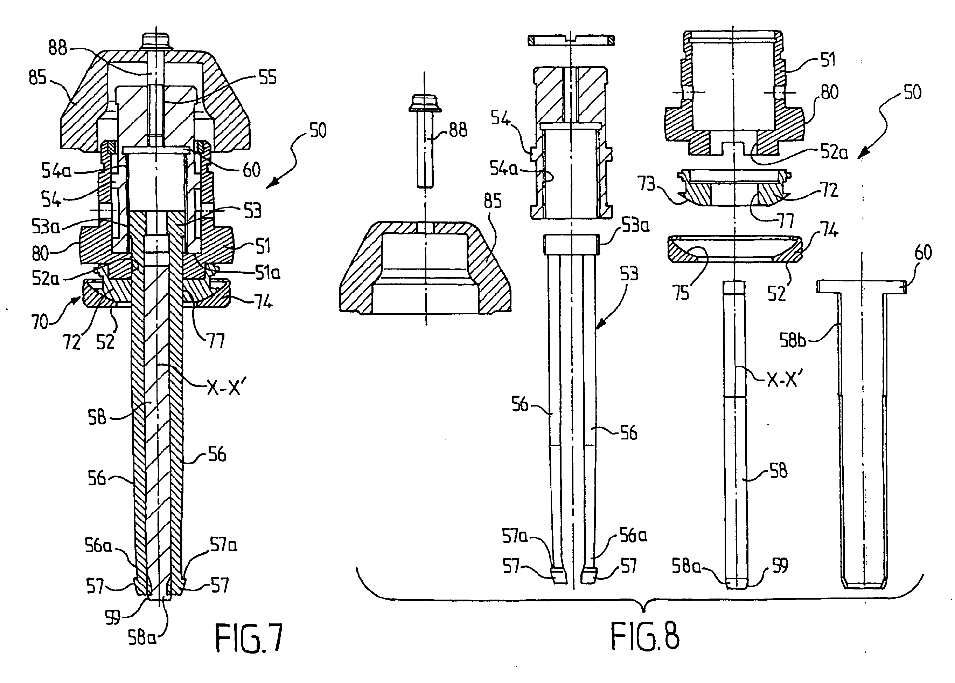

La figure 7 illustre un premier mode de réalisation d'une agrafe d'épinglage à vis 50 conforme à la présente invention et destinée à fixer par serrage au moins temporairement la grille de perçage 10 sur les demi éléments 20, 20' de la figure 2 à assembler.

Cette agrafe 50 comporte ainsi :
- un corps cylindrique creux 51 s'étendant selon un axe d'allongement XX' et comportant une face d'appui 52 destinée à venir au contact de la surface externe 21 de l'élément 20 (Cf. figure 7), ladite face d'appui étant traversée par un orifice circulaire 52a,
- une tige centrale 53 traversant localement le corps creux 51 et présentant une portion localisée à l'intérieur dudit corps creux munie d'un filetage externe 53a,
- un écrou monté 54 sur l'extrémité filetée 53a de la tige centrale 53 et prenant appui sur une face d'extrémité 51a du corps creux,
- deux demi pinces axiales 56 solidaires de la tige centrale 53, lesdites pinces présentant, à leur extrémité libre 56a, des rebords 57 faisant saillie vers l'extérieur, sensiblement radialement, pour former des becs d'accrochage,
- un écarteur central 58 disposé le long de l'axe d'allongement XX', entre les deux demi pinces 56, et solidaire du corps creux 51 à l'intérieur duquel il est immobilisé en rotation et en translation.

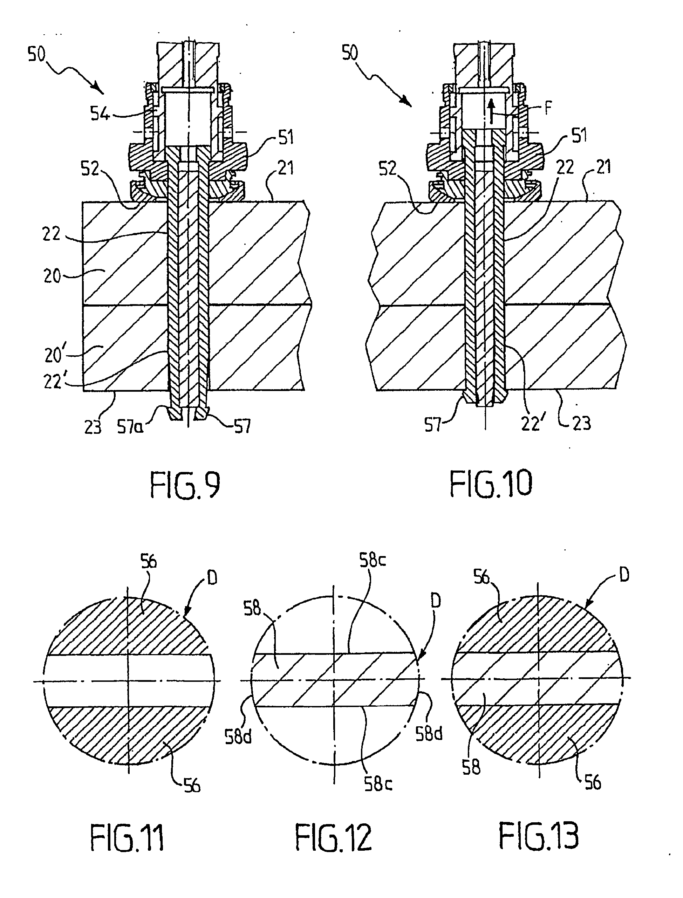

L'ensemble tige centrale 53/demi pinces 56 est adapté pour pouvoir être déplacé axialement à l'intérieur du corps creux 51 et le long de l'écarteur 58 par rotation de l'écrou 54 sur la tige filetée 53a, entre une première position de repos dans laquelle les becs d'accrochages 57 sont rapprochés radialement de manière à pouvoir s'engager dans les orifices 22, 22' des éléments à assembler 20, 20' (figure 9), et une seconde position active dans laquelle les deux demi pinces 56 sont rétractées à l'intérieur du corps creux 51 selon la flèche F (figure 10) et écartées radialement le long de l'écarteur 58 de sorte que les becs d'accrochage 57 viennent s'accrocher derrière la face extérieure 23 de l'élément 20', en bordure de son orifice 22'.

Les deux demi pinces 56 sont identiques et symétriques par rapport à l'axe longitudinal XX' du corps creux 51.

L'écarteur 58 est pourvu, à une extrémité proximale 58a, de chanfreins 59 symétriques facilitant son engagement entre les becs d'accrochage 57 et, à son autre extrémité 58b, de deux épaulements symétriques 60 en forme de T destinés à immobiliser l'écarteur en position axiale et en rotation à l'intérieur du corps creux 51.

Avantageusement, comme cela est visible sur les figures 11 à 13, l'ensemble formé par les demi pinces 56 et l'écarteur 58 présente, en coupe, la forme d'un cercle quasi-parfait dont le diamètre D est identique au diamètre interne des orifices 22 et de l'orifice circulaire 52a, avec un jeu strictement minimum pour permettre le coulissement longitudinal dudit ensemble dans lesdits orifices 22.

On entend par cercle quasi-parfait (c'est-à-dire aux tolérances de fabrication près) le fait que les surfaces périphériques de chaque demi pince et de l'écarteur sont sensiblement continue et décrivent un cercle parfait, sans décrochement radial, ou avec une réduction de diamètre extrêmement faible au niveau de l'écarteur.

Plus particulièrement, le cercle que forme les deux demi pinces 56 dans la position de repos, avant introduction dans un orifice 22, présente un diamètre sensiblement égal au diamètre dudit orifice 22.

De même, comme cela est visible sur la figure 12, l'écarteur 58 présente, en coupe transversale, une forme générale de lame plate rectangulaire ayant deux faces longitudinales 58c parallèles et deux côtés latéraux 58d de forme convexe avec un rayon de courbure sensiblement égal à la moitié du diamètre interne de l'orifice 22.

Ainsi, une fois l'écarteur 58 monté entre les demi pinces 56, comme illustré sur la figure 13, cet ensemble forme, en coupe, un cercle quasi-parfait présentant un jeu minimum avec le diamètre interne de l'orifice 52a d'une part et avec le diamètre interne de l'orifice 22 d'autre part, pour permettre l'introduction et le coulissement axial de l'agrafe 50 dans ce dernier.

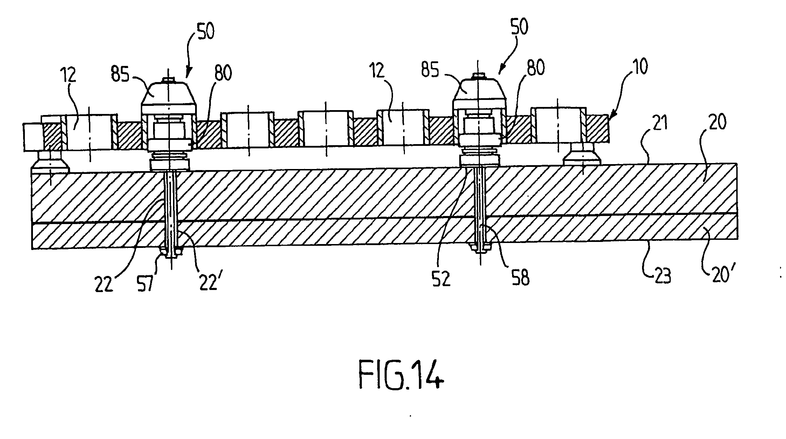

L'agrafe 50 conforme à l'invention permet donc, comme illustré sur la figure 14, de positionner avec précision la grille de perçage 10 sur les deux éléments à assembler 20, 20', et ce grâce à des moyens supplémentaires qui seront décrits plus en détail par la suite.

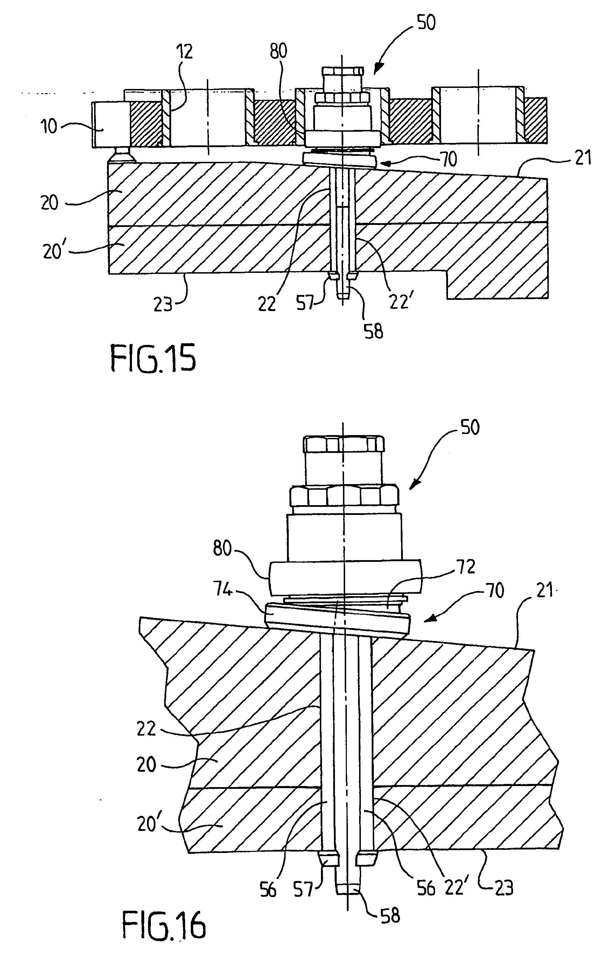

Les figures 15 et 16 illustrent un mode de réalisation dans lequel la surface 21 de l'élément 20 sur lequel repose la face d'appui 52 de l'agrafe 50 est inclinée par rapport à l'axe principal XX' du corps creux 51.

Pour permettre un positionnement optimal de l'agrafe 50 par rapport aux orifices respectifs de la grille de perçage 10 et de la structure 20, 20', il est prévu de munir ladite agrafe d'une rotule de positionnement 70 destinée à compenser les différence de parallélisme entre la surface d'appui 52 et la surface de repos 21.

La rotule 70 comporte comme représenté sur la figure 8 une portée de centrage annulaire 72 comportant une surface externe convexe 73 de forme sphérique coopérant avec une rondelle d'appui 74 comportant une surface interne concave 75 de forme sphérique complémentaire de la surface convexe 73.

Ainsi, quand la surface d'appui 52 de la rondelle d'appui 74 repose sur la face externe 21 de l'élément 20, la surface concave de forme sphérique 75 de la rondelle d'appui 74 peut pivoter contre la surface convexe de forme sphérique 73 de la portée d'appui 72 de manière à maintenir l'agrafe 50 dans l'axe des orifices coaxiaux 12 22 et 22'. Ce système rotulé permet à l'agrafe de s'auto-adapter sur la face externe 21 de l'élément 20. Il est en effet assez fréquent dans le domaine de l'aéronautique que de telles pièces présentent des épaisseurs dégressives, induisant une pente au niveau de l'une au moins de leurs surfaces externes, comme dans le cas présent. L'angle de débattement de cette rotule 70 est de ± 10°.

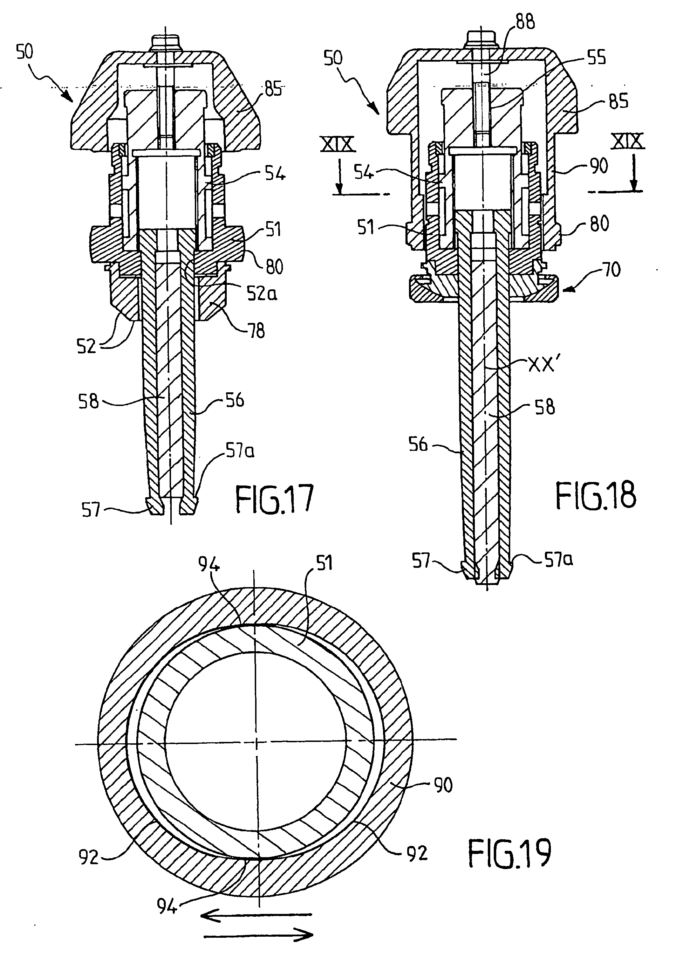

Selon une variante de réalisation illustrée par la figure 17, la face d'appui est constituée par une portée conique de centrage 78 ayant un angle au sommet allant d'environ 90° à 140°. Cette fraisure conique permet par exemple à l'agrafe 50 de se positionner dans un orifice de référence pré-percé dans l'élément supérieur 20 et doté d'un avant trou fraisuré ayant également un angle au sommet d'environ 90° à 140° adapté par exemple pour recevoir ultérieurement la tête fraisée standard d'une vis de fixation.

Dans ces différents modes de réalisation, le corps creux 51 est entouré par une portée pseudo sphérique 80 représenté notamment sur les figures 7, 8, 14 et 15. Cette portée présente un diamètre extérieur maximal sensiblement égal, au jeu de glissement près, au diamètre intérieur de l'alvéole 12 de la grille de perçage 10 comme illustré sur la figure 15. La portée pseudo sphérique 80 permet d'engager sans coincement mécanique l'alvéole 12 de la grille de perçage 10 sur l'agrafe 50 et constitue une surface de référence pour le positionnement de la grille de perçage 10.

Avantageusement, l'orifice circulaire 52a traversant le corps creux 51 est parfaitement coaxial avec la portée de centrage 80, le diamètre dudit orifice étant égal au diamètre demi pinces/écarteur avec le jeu mécanique strictement minimum nécessaire au glissement des demi pinces. Ainsi donc lorsque l'agrafe est introduite dans les trous de référence 22 et 22' percés dans les éléments à assembler, l'axe de la partie de centrage 80 s'aligne parfaitement sur l'axe dudit trou par l'intermédiaire de l'ensemble tige-pince lui-même parfaitement centré dans le trou. Cette disposition avantageuse permet de pouvoir ensuite positionner et centrer avec toute la précision voulue l'alvéole 12 de référence de la grille de perçage 10 sur la partie de centrage 80 de l'agrafe, d'où le nom de dispositif-positionneur centreur attribué à ce type d'agrafe.

Comme cela est représenté sur les figures 7, 8 et 14, 17, 18, l'agrafe 50 comporte également un chapeau 85 monté sur l'écrou 54 au moyen d'une vis 88 s'engageant dans un filetage arrière 55 de ce dernier. Ce chapeau présente un diamètre supérieur au diamètre interne des alvéoles 12 de la grille de perçage 10 et permet ainsi, grâce au serrage de la vis 88, de fixer solidement la grille 10 sur les deux élément à assembler 20 et 20', comme illustré sur la figure 14.

Selon une variante de réalisation dite « auto-adaptive », telle qu'illustrée par les figures 18 et 19, le corps creux 51 présente un diamètre extérieur plus faible que les modes de réalisation précédents de manière à pouvoir être entouré par un fourreau cylindrique creux 90 formant une seule pièce avec le chapeau 85. Ce fourreau 90 est muni sur son pourtour de la portée pseudo-sphérique 80 destinée à coopérer avec l'intérieur de l'alvéole 12 de la grille de perçage 10.

Le fourreau 90 présente également en coupe une section oblongue constituée de deux demi cylindres 92 de rayon sensiblement égal au rayon externe du corps creux 51, raccordés par deux méplats 94 de longueur égale à l'entraxe des deux demi cylindres. Cette forme particulière, illustrée plus en détail sur la figure 19, permet un débattement radial selon un seul axe entre le corps creux 51 et le fourreau additionnel 90. Cette variante de réalisation est appelée « locating » selon la terminologie usuelle en mécanique, qui désigne un dispositif capable d'un certain degré d'auto-alignement dont le débattement maximum est égal à l'entraxe des deux demi cylindres constituant la forme oblongue de la paroi intérieure du fourreau additionnel 90.

L'utilisation de ce type d'agrafe d'épinglage à vis dans le cadre de la fixation d'une grille 10 formant un gabarit de perçage sur la structure d'un aéronef constituée des éléments 20 et 20', s'effectue de la manière suivante.

Les éléments structuraux à assembler 20 et 20' sont respectivement préalablement percés en usine d'orifices 22 et 22'. L'opérateur sélectionne l'agrafe 50 ayant le diamètre de demi pinces le mieux adapté au diamètre des orifices 22 et 22' de sorte qu'au repos, l'ensemble tige centrale 53/demi pinces 56/écarteur 58 puisse être engagé sans effort dans ces orifices. Avantageusement, les deux demi pinces 56 sont centrées de manière précise uniquement sur l'orifice 22 du premier élément 20.

La mise en rotation de l'écrou 54 dans le sens de vissage au moyen d'une visseuse ou d'une clé adaptée provoque la rétraction de l'ensemble tige centrale 53/demi pinces 56 à l'intérieur du corps creux 51. Les deux demi pinces 56 se trouvent ainsi entraînées en glissant selon la flèche F de la figure 10 d'une part à l'intérieur des orifices 22, 22' et de l'orifice 52a, et d'autre part le long des faces longitudinales 58c de l'écarteur 58, ce dernier étant immobile en rotation et en translation par rapport au corps creux 51 grâce aux épaulement 60 en T. Les extrémités chanfreinées de l'écarteur s'engagent alors dans l'interstice entre les deux becs d'accrochage 57 et provoque l'écartement radial de ces derniers. Les surfaces antérieures de portée 57a des deux becs 57 prennent alors appui sur la face externe postérieure 23 de l'élément 20' jusqu'à ce que lesdits becs viennent s'accoster fermement par compression entre la face d'appui 52 du corps creux 50 et lesdites surfaces antérieures 57a (Cf. figure 10).

Grâce aux faces planes 58c rigoureusement parallèles réalisées sur l'écarteur 58 ainsi que dans la rainure réalisée entre les deux demi pinces 56, la forme circulaire des demi pinces et de l'écarteur se trouve parfaitement maintenue pendant la rétraction axiale des demi pinces. Ainsi un contact parfait est constamment maintenu entre la paroi intérieure des orifices 22, 22' et les surfaces périphériques cylindriques des demi pinces 56 et de l'écarteur 58, du début de la rétraction jusqu'à l'accostage final des becs 57.

L'ensemble formé par les demi pinces 56 présente un écartement interne, mesuré au niveau de leurs extrémités libres 56a, qui diminue progressivement en direction des becs 57 selon un angle inférieur à 45°, de préférence proche de 20°. Ainsi, le passage de la position de repos à la position active des demi pinces par glissement le long de l'écarteur 58 s'effectue beaucoup plus rapidement que dans les agrafes de l'art antérieur, avec une faible rotation de l'écrou 54 sur la tige filetée 53 et une course longitudinale maximale de l'écarteur 58 d'environ 15mm pour l'application de la précharge.

Il ne reste plus ensuite qu'à positionner l'alvéole 12 de la grille de perçage 10 sur l'agrafe 50, puis de mettre en place le chapeau 85 afin de fixer solidement la grille de perçage 10 sur les éléments à assembler, comme illustré sur la figure 13, pour pouvoir ensuite supporter les efforts des unités de perçage.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, le chapeau 85 peut être fixé sur l'écrou 54 d'une autre façon qu'à l'aide de la vis 88. En effet, la vis 88 peut être intégrée directement dans ledit chapeau et venir se visser dans un alésage de l'écrou, on inversement, ou d'autres moyens de fixation peuvent être envisagés sans sortir de la portée de l'invention.

## Revendications

1. Agrafe d'épinglage à vis (50) destinée à être introduite dans des orifices respectifs coaxiaux (22, 22') d'au moins deux éléments (20, 20') à assembler et dans des alvéoles (12) d'une grille de perçage (10) formant gabarit, coaxiales avec les orifices de références (22, 22'), du type comprenant :
- un corps cylindrique creux (51) s'étendant selon un axe d'allongement (XX') et comportant une face d'appui (52) destinée à venir au contact de la surface externe (21) d'un premier (20) des deux éléments,
- une tige centrale (53) traversant localement le corps creux (51) et présentant une portion localisée à l'intérieur dudit corps creux munie d'un filetage externe (53a),
- un écrou (54) monté sur l'extrémité filetée (53a) de la tige (53) et prenant appui sur une face d'extrémité (51a) du corps creux (51),
- deux demi pinces axiales (56) solidaires de la tige (53), lesdites pinces présentant, à leur extrémité libre (56a), des rebords (57) faisant saillie vers l'extérieur, sensiblement radialement, pour former des becs d'accrochage sur la surface externe du second des deux éléments (20'),
- un écarteur central (58) disposé le long de l'axe d'allongement (XX') entre les deux demi pinces (56) et solidaire du corps creux (51) à l'intérieur duquel il est immobilisé en rotation et en translation,
- l'ensemble tige/demi pinces pouvant être déplacé axialement à l'intérieur du corps creux (51) et le long de l'écarteur (58) par rotation de l'écrou (54) sur la tige filetée (53a) entre une première position de repos dans laquelle les becs d'accrochage (57) des deux demi pinces (56) sont rapprochés radialement de manière à pouvoir s'engager dans les orifices (22, 22') des deux éléments (20, 20'), et une seconde position active dans laquelle les deux demi pinces (56) sont rétractées à l'intérieur du corps creux (51) et écartées radialement le long de l'écarteur (58) de sorte que les becs d'accrochage (57) viennent s'accrocher sur la surface externe (23) du deuxième élément (20'), en bordure de son orifice (22'), afin de maintenir les deux éléments l'un contre l'autre entre lesdits becs (57) et la face d'appui (52) sur le premier élément (20),
au moins dans la position de repos de l'agrafe (50), l'ensemble formé par les demi pinces (56) et l'écarteur (58) présentant, en coupe, la forme d'un cercle quasi-parfait dont le diamètre (D) est identique au diamètre interne des orifices (22, 22') des deux éléments (20, 20') à assembler, avec un jeu minimum pour permettre le coulissement longitudinal dudit ensemble dans lesdits orifices,
l'agrafe étant **caractérisée en ce qu'**elle comporte une portée de centrage (80) en forme d'anneau à section pseudo sphérique, dont le diamètre externe correspond au diamètre interne de l'une au moins des alvéoles (12) de la grille de perçage (10),
ladite portée de centrage étant portée par une surface cylindrique externe du corps creux (51) ou d'un fourreau (90) cylindrique creux entourant ledit corps creux (51), **ledit fourreau formant une seule pièce avec un chapeau (85) monté sur l'écrou (54), le diamètre externe dudit chapeau étant supérieur au diamètre interne de ladite alvéole (12)**, ledit fourreau présentant en coupe une section oblongue constituée de deux demi cylindres (92) de rayon sensiblement égal au rayon externe du corps creux, raccordés par deux méplats (94) de longueur égale à l'entraxe des deux demi cylindres.

2. Agrafe selon la revendication 1, **caractérisée en ce que la portée de centrage est portée par une surface cylindrique externe du corps creux (51), l'agrafe comportant** également un chapeau (85) monté sur l'écrou (54) le diamètre externe dudit chapeau étant supérieur au diamètre interne de ladite alvéole (12).

3. Agrafe selon la revendication **1 ou 2**, **caractérisée en ce que le chapeau est monté sur l'écrou (54) au moyen d'une vis (88), le serrage de cette vis (88) assurant la fixation de la grille (10) sur les éléments à assembler (20, 20')**.

4. Agrafe selon l'une des revendications précédentes, **caractérisée en ce que** l'écarteur (58) est en forme de lame plate et présente deux faces longitudinales (58c) parallèles et deux côtés latéraux (58d) de forme convexe présentant un rayon de courbure externe identique au diamètre externe des demi pinces (56).

5. Agrafe selon l'une des revendications précédentes, **caractérisée en ce que** l'écarteur (58) est pourvu, à une extrémité proximale (58a), de chanfreins (59) symétriques facilitant son engagement entre les becs d'accrochage (57) et, à son autre extrémité (58b), de deux épaulements symétriques (60) en forme de T destinés à immobiliser l'écarteur (58) en position axiale et en rotation à l'intérieur du corps creux (51).

6. Agrafe selon l'une quelconque des revendications précédentes, **caractérisée en ce que** les demi pinces (56) sont identiques et symétriques par rapport à l'axe d'allongement (XX').

7. Agrafe selon la revendication l'une des revendications précédentes, **caractérisée en ce qu'**elle comporte une rotule de positionnement (70) de la face d'appui (52) du corps creux (51).

8. Agrafe selon la revendication 7, **caractérisée en ce que** la rotule (70) comporte une portée de centrage annulaire (72) comportant une surface externe convexe (73) de forme sphérique coopérant avec une rondelle d'appui (74) comportant une surface interne concave (75) de forme sphérique complémentaire de la surface convexe (73).

9. Agrafe selon l'une des revendications 1 à 6, **caractérisée en ce que** la face d'appui (52) est constituée par une portée conique de centrage (78) ayant un angle au sommet allant d'environ 90° à 140°.

10. Agrafe selon l'une quelconque des revendications précédentes, **caractérisée en ce que** le corps creux (51) est traversé par un orifice circulaire (52a) qui est coaxial à la portée sphérique (80) et dont le diamètre est identique au diamètre (D) de l'ensemble formé par les demi pinces (56) et l'écarteur (58).

11. Procédé utilisant une agrafe selon l'une quelconque des revendications précédentes pour fixer, au moins temporairement, deux éléments (20, 20') présentant des orifices coaxiaux (22, 22') destinés à recevoir une partie de ladite agrafe.

12. Utilisation d'une agrafe selon l'une quelconque des revendications **1 à 10** pour positionner avec précision une grille de perçage (10) par rapport à deux éléments (20, 20') à assembler comportant des orifices coaxiaux (22, 22') destinés à recevoir une partie de ladite agrafe.

## Claims

1. A screw fastening device (50) intended to be inserted into respective coaxial openings (22, 22') of at least two elements (20, 22') to be assembled together and in the apertures (12) of a grill plate (10) making up a template, coaxial with reference openings (22,22'), of a type comprising:
- A hollow cylindrical body (51) extending along an axis (XX') and featuring a bearing surface (52) that will come into contact with the external surface (21) of the first (20) of two elements,
- A central shank (53) that locally transverses the hollow body (51) and presents a portion located within this hollow body with an external threading (53a),
- A nut (54) mounted on the threaded end (53a) of the shank (53) and bearing on a surface at the end (51 a) of the hollow body (51),
- Two axial half clips (56) making up part of the shank (53), said clips containing appreciably protruding radial edges (57) to the outside on their free ends (56a), that form hooking lips on the external surface of the second of the two elements (20').
A central spacer (58) laid out along the elongation axis (XX') between the two half-clips (56) and of a piece with the hollow body (56), at the inside of which it is fixed against rotation and translation motion,
- The shank/half-clip set being axially mobile within the hollow body (51) and along the spacer (58) by rotating the nut on the threaded shank (53a) between a first resting position wherein the hooking lips (57) of the two half-clips (56) are radially close such as they can engage the openings (22, 22') of the two elements (20, 20'), and a second active position in which the two half-clips (56) are retracted inside the hollow body (51) and radially distanced from each other along the spacer (58), such that the hooking lips (57) attach to the external surface (23) of the second element (20') on the edge of its opening (22') in order to maintain the two elements in position against each other between the two lips (57) and the bearing surface (52) on the first element (20), at least in the device's rest position (52), with the set formed by the half-clips (56) and the spacer (58) presenting in section the form of a quasi-perfect circle the diameter (D) of which is identical to the internal diameter of the openings (22, 22') to be assembled, with minimal play to allow longitudinal movement of said set in said openings
The device is **characterized in that** it contains a centering seat (80) in the form of a pseudo spherical ring section, the diameter of which corresponds to the internal diameter of at least one of the openings (12) of the grill plate (10),
The said centering seat bears on an external cylindrical surface of the hollow body (51) or of a hollow cylindrical casing (90) surrounding the hollow body (51), said casing being of a single piece with the cap (85) mounted on the nut (54), and the diameter of said cap being greater than the internal diameter of said opening (12), said casing as seen in section presents an oblong segment made up of two half cylinders (92) with a radius roughly equal to the external radius of the hollow body, connected by two planes (94) of a length equal to the center distance of the two half cylinders.

2. A fastening device according to claim 1, **characterized in that** the bearing seat is carried by an external cylindrical surface of the hollow body (51), the fastener also containing a cap (85) mounted on the nut (54), the external diameter of said cap being greater than the diameter of said opening (12).

3. A fastening device according to claim 1 or 2, **characterized in that** the cap is mounted on the nut (54) by means of a screw (88), which when tightened fixes the grill plate (10) to the elements to be assembled together (20, 20').

4. A fastening device according to the preceding claims **characterized in that** the spacer (58) is in the form of a flat blade that presents two parallel longitudinal sides (58c) and two lateral convex sides (58d) with an external curve radius identical to the external diameter of the half clips (56).

5. A fastening device according to the preceding claims **characterized in that** the spacer (58) has symmetrical beveled edges (59) at its lower end (58a) that facilitate its fitting between the hooking lips (57) and, at its other end (58b) two symmetrical T-shaped shoulders (60) that immobilize the spacer (58) in an axial position and in rotation within the hollow body (51).

6. A fastening device according to the preceding claims **characterized in that** the half clips (56) are identical and symmetrical with respect to the elongation axis (XX').

7. A fastening device according to one of the preceding claims **characterized in that** it has a positioning joint (70) on the bearing surface (52) of the hollow body (51).

8. A fastening device according to claim 7 **characterized in that** the joint (70) has an annular centering seat (72) with a spherical external convex surface (73) fitting against a thrust washer (74) with a spherical internal concave surface (75) complementary to the convex surface (73).

9. A fastening device according to claims 1 to 6 **characterized in that** the bearing surface (52) is comprised of a conical centering seat (78) with a summit angle ranging between about 90° to 140°.

10. A fastening device according to any one of the preceding claims **characterized in that** the hollow body (51) is traversed by a circular opening (52a) that is coaxial to the spherical seat (80), for which the diameter (D) is identical to the piece formed by the half clips (56) and the spacer (58).

11. A procedure using a fastening device according to any of the preceding claims to fix together, at least temporarily, two elements (20, 20') with coaxial openings (22, 22') in which part of the said fastening device will be inserted.

12. Use of a fastening device according to any of claims 1 to 10 to accurately position a grill plate (10) with relation to two elements (20, 20') to be assembled together with coaxial openings (22, 22') into which a part of said fastening devices will be inserted.

## Patentansprüche

1. Schraubheftklammer (50), die dazu bestimmt ist, in die jeweiligen koaxialen Öffnungen (22, 22') von zumindest zwei Elementen (20, 20') eingeführt zu werden, die es zusammenzusetzen gilt, sowie in die Zellen (12) einer als Lehre fungierenden Bohrschablone (10), die koaxial zu den Bezugsöffnungen (22, 22') liegen, umfassend:
- einen zylindrischen Hohlkörper (51), der sich über eine Längsachse (XX') erstreckt und eine Auflagefläche (52) umfasst, die dazu bestimmt ist, die Außenfläche (21) eines ersten (20) der beiden Elemente zu berühren,
- einen zentralliegenden Stift (53), der lokal durch den Hohlkörper (51) führt und einen lokalisierten Abschnitt im Inneren des besagten Hohlkörpers mit einem Außengewinde (53a) aufweist,
- eine Mutter (54), die auf dem Ende des Stiftes (53) mit dem Gewinde (53a) montiert ist, und auf einer Fläche am Ende (51 a) des Hohlkörpers (51) aufliegt,
- zwei axiale Halbzangen (56) die fest mit dem Stift (53) verbunden sind, wobei die Zangen an ihrem freien Ende (56a) Ränder (57) aufweisen, die in etwa radial nach außen überstehen, um an der Außenfläche des zweiten der beiden Elemente (20') Rasthaken zu bilden,
- einen zentralen Spreizer (58) der entlang der Längsachse (XX') zwischen den beiden Halbzangen (56) angeordnet, und fest mit dem Hohlkörper (51) verbunden ist, im Inneren dessen er gegen Verdrehen und Vorschub gesichert ist,
- wobei die Einheit Stift/ Halbzangen axial im Inneren des Hohlkörpers (51) und entlang des Spreizers (58) durch Verdrehen der Mutter (54) auf dem Gewindestift (53a) zwischen einer ersten Ruhestellung verschoben werden kann, in der die Rasthaken (57) der beiden Halbzangen (56) radial so angenähert sind, dass sie in die Öffnungen (22, 22') der beiden Elemente (20, 20') eingeführt werden können, und einer zweiten aktiven Stellung, in der die beiden Halbzangen (56) ins Innere des Hohlkörpers (51) zurückgezogen, und radial entlang des Spreizers (58) so gespreizt werden, dass sich die Rasthaken (57) an der Außenfläche (23) des zweiten Elements (20') am Rand seiner Öffnung (22') anhaften, um die beiden Elemente zwischen den besagten Haken (57) und der Auflagefläche (52) auf dem ersten Element (20) gegeneinander zu drücken,
wobei die Einheit, die durch die beiden Halbzangen (56) und den Spreizer (58) gebildet wird, zumindest in der Ruhestellung der Klemme (50) im Schnitt die Form eines quasi perfekten Kreises aufweist, dessen Durchmesser (D) gleich dem Innendurchmesser der Öffnungen (22, 22') der beiden zusammenzusetzenden Elemente (20, 20') ist, mit einem minimalen Spiel, damit die besagte Einheit in der Längsrichtung durch die besagten Öffnungen gleiten kann,
wobei die Klemme **dadurch gekennzeichnet ist, dass** sie eine Zentrierauflage (80) in Form eines Ringes mit einem pseudo-kugelförmigen Querschnitt umfasst, deren Außendurchmesser dem Innendurchmesser zumindest einer der Zellen (12) der Bohrschablone (10) entspricht,
wobei die besagte Zentrierauflage durch eine zylindrische Außenfläche des Hohlkörpers (51) oder einer zylindrischen hohlen Rohrhülse (90) gehalten wird, die den besagten Hohlkörper (51) umgibt, wobei die besagte Rohrhülse ein Einzelteil mit einer Kappe (85) bildet, die auf der Mutter (54) montiert ist, wobei der Außendurchmesser der besagten Kappe größer ist, als der Innendurchmesser der besagten Zelle (12), und die besagte Rohrhülse im Schnitt einen länglichen Querschnitt aufweist, der aus zwei Halbzylindern (92) mit einem Radius gebildet wird, der in etwa gleich dem Außenradius des Hohlkörpers ist, die durch zwei Abflachungen (94) verbunden werden, deren Länge gleich dem Achsabstand der beiden Halbzylinder ist.

2. Klemme nach Anspruch 1, **dadurch gekennzeichnet, dass** die Zentrierauflage durch eine zylindrische Außenfläche des Hohlkörpers (51) gehalten wird, und die Klemme ebenfalls eine Kappe (85) umfasst, die auf der Mutter (54) montiert ist, wobei der Außendurchmesser der besagten Kappe größer ist, als der Innendurchmesser der besagten Zelle (12).

3. Klemme nach Anspruch 1 oder 2, **dadurch gekennzeichnet, dass** die Kappe mit einer Schraube (88) auf der Mutter (54) montiert ist, und die Klemmung dieser Schraube (88) für die Befestigung der Schablone (10) auf den Elementen (20, 20') sorgt, die es zusammenzusetzen gilt.

4. Klemme nach einem der vorherigen Ansprüche, **dadurch gekennzeichnet, dass** der Spreizer (58) die Form einer flachen Klinge hat, und zwei parallele Längsflächen (58c) und zwei konvexe Seitenflächen (58d) aufweist, die einen äußeren Biegeradius aufweisen, der gleich dem Außendurchmesser der Halbzangen (56) ist.

5. Klemme nach einem der vorherigen Ansprüche, **dadurch gekennzeichnet, dass** der Spreizer (58) an einem proximalen Ende (58a) mit symmetrischen Fasen (59) versehen ist, die seine Einführung zwischen die Rasthaken (57) erleichtert, sowie an seinem anderen Ende (58b) mit zwei symmetrischen Bünden (60) in Form eines T, die dazu bestimmt sind, den Spreizer (58) in der axialen Stellung und im Inneren des Hohlkörpers (51) drehend zu blockieren.

6. Klemme nach irgendeinem der vorherigen Ansprüche, **dadurch gekennzeichnet, dass** die Halbzangen (56) in Bezug auf die Längsachse (XX') identisch und symmetrisch sind.

7. Klemme nach einem der vorherigen Ansprüche, **dadurch gekennzeichnet, dass** sie ein Drehgelenk zum Positionieren (70) der Auflagefläche (52) des Hohlkörpers (51) umfasst.

8. Klemme nach Anspruch 7, **dadurch gekennzeichnet, dass** das Drehgelenk (70) eine ringförmige Zentrierauflage (72) umfasst, die eine konvexe Außenfläche (73) in Kugelform umfasst, die mit einer Auflagescheibe (74) zusammenwirkt, die eine konkave Innenfläche (75) in Kugelform umfasst, die die konvexe Fläche (73) ergänzt.

9. Klemme nach einem der Ansprüche 1 bis 6, **dadurch gekennzeichnet, dass** die Auflagefläche (52) durch eine konische Zentrierauflage (78) gebildet wird, die am Scheitel einen Winkel aufweist, der von etwa 90° bis 140° reicht.

10. Klemme nach irgendeinem der vorherigen Ansprüche, **dadurch gekennzeichnet, dass** der Hohlkörper (51) von einer runden Öffnung (52a) durchzogen wird, die koaxial zur Kugelauflage (80) verläuft und deren Durchmesser gleich dem Durchmesser (D) jener Einheit ist, die von den Halbzangen (56) und dem Spreizer gebildet wird.

11. Verfahren unter Verwendung einer Klemme nach irgendeinem der vorherigen Ansprüche, zum zumindest vorübergehenden Befestigen von zwei Elementen (20, 20'), die koaxiale Öffnungen (22, 22') aufweisen, die dazu bestimmt sind, einen Teil der besagten Klemme aufzunehmen.

12. Verwendung einer Klemme nach irgendeinem der Ansprüche 1 bis 10, zum präzisen Positionieren einer Bohrschablone (10) in Bezug auf zwei zusammenzusetzende Elemente (20, 20') umfassend zwei koaxiale Öffnungen (22, 22'), die dazu bestimmt sind, einen Teil der besagten Klemme aufzunehmen.
